# EUROPEAN PATENT SPECIFICATION

(11) **EP 2 817 524 B1**
(45) Date of publication and mention of the grant of the patent: **02.10.2019**
(21) Application number: 12869090.6
(22) Date of filing: 23.02.2012
(51) Int. Cl.: F16B 37/08, F16B 31/00

(54) **SEPARATION FASTENER ASSEMBLY**
BEFESTIGERTRENNUNGSANORDNUNG
ENSEMBLE DE FIXATION À SÉPARATION

(43) Date of publication of application: 31.12.2014
(73) Proprietor: Autoliv Development AB, 447 83 Vårgårda (SE)
(72) Inventor: AHLQVIST, Anders, 44734 Vårgårda (SE); ÖSTLING, Martin, 50733 Brämhult (SE)
(74) Representative: AWA Sweden AB
(86) International application number: PCT/SE2012/050203
(87) International publication number: WO 2013/125998

(56) References cited:
- US-A- 4 929 135
- US-A- 5 221 171
- US-A1- 2010 004 826
- US-A1- 2010 021 264
- US-A1- 2010 021 265
- US-A1- 2010 021 265
- US-B1- 6 352 397

## Description

### Technical Field of the Invention

The present invention relates to a separation fastener assembly comprising a nut having a plurality of nut segments, a movable element which is movable from a first position, in which it restrains the nut segments from radial expansion, to a second position, in which it permits the nut segments to radially expand, a bolt having one end coupled to the nut, and a retaining element which is arranged to hold the nut in place.

### Background Art

Separation fastener assemblies have been used for various applications and are generally responsive to a signal for releasing secured components. One type of separation fastener includes a pyrotechnic charge that is actuated to release the components. A typical assembly may include a nut having a plurality of discrete segments. The discrete segments are arranged within the fastener assembly to normally retain a bolt. When the separation fastener assembly is pyrotechnically actuated, the discrete nut segments move outward in response to an axial load on the bolt. As a result, the bolt is released.

US 2010/0021265 A1 discloses a separation fastener assembly. The assembly comprises a movable element. In a first position the movable element restrain nut segments from radial expansion. In a second position the nut segments are permitted to radially expand for releasing the fastener assembly.

With respect to previously known solutions, it is desirable to provide a more robust separation fastener arrangement.

### Summary of the Invention

It is an object of the present invention to provide a separation fastener assembly that can be made robust in a cost efficient manner.

This and other objects that will be apparent from the following summary and description are achieved by a separation fastener arrangement according to the appended claims.

According to an aspect of the present invention, there is provided a separation fastener assembly comprising a nut having a plurality of nut segments, a movable element which is movable from a first position, in which it restrains the nut segments from radial expansion, to a second position, in which it permits the nut segments to radially expand, a bolt having one end coupled to the nut, and a retaining element which is arranged to hold the nut in place, wherein the retaining element comprises an energy absorbing portion which is sleeve shaped and adapted to be permanently deformed by the movable element when the movable element is moved from the first position to the second position.

Such a separation fastener assembly may e.g. be used to connect a structural member of a vehicle to a chassis thereof in a releasably manner. As long as the separation fastener assembly is not activated the movable element is held in a first position in which it secures the connecting function of the fastener assembly. The separation fastener assembly is activated, e.g. by an initiator device, when there is a need to destroy the coupling function of a bolt joint system formed by the bolt and nut of the separation fastener assembly. As long as the separation fastener assembly is not activated the movable element is positioned in a position in which it restrains the nut segments. Upon activation of the separation fastener assembly the movable element is moved from this position to a position in which it no longer restrains the nut segments from radial expansion. The movable element may be moved by, e.g., a force generated by a pyrotechnical charge. During the movement towards the second position energy is absorbed by the energy absorbing portion. Hence, the retaining element combines the function of holding the nut in place and the function of load limiting the movable element when the arrangement is activated. By this combination a separation fastener assembly that can be made robust in a cost-efficient manner is achieved.

When the movable element is moved from the first position to a second position, parts of the separation fastener assembly, such as e.g. a housing accommodating the nut, may be subjected to high dynamical loads by the movable element. Such dynamical loads may be very high since a very rapid movement of the movable element is often desired and they may thus destroy e.g. a housing accommodating the nut and even separate parts from the separation fastener assembly. Often a pyrotechnical charge is used to provide a robust and rapid release of the bolt of a separation fastener assembly. Then parts of the separation fastener arrangement are subjected to high loads generated by the movement of the movable element following the detonation of the pyrotechnical charge.

The energy absorbing portion absorbs energy when deformed in a longitudinal direction thereof by the movable element. Hence, the energy absorbing portion provides for load limiting of the movable element, which has the advantage that loads to parts, such as a housing accommodating the nut, during separation of the fastener assembly may be significantly reduced.

The movable element is thus movable to the second position against a force from the energy absorbing portion. Since the energy absorbing portion is adapted to be permanently deformed, i.e. to absorb energy, the retaining element serves as a load limiter limiting the load on the housing accommodating the movable element.

According to one embodiment adjacent nut segments are interconnected at fracture lines, thereby forming a frangible nut.

According to the invention, at least a sub portion of the energy absorbing portion is narrowing as seen in a direction from a first end to a second end thereof in order to absorb energy in an efficient manner.

Preferably, at least a sub portion of the energy absorbing portion has a progressively increasing cross section as seen in a direction from a second end to a first end thereof.

In order to further enhance the energy absorbing characteristics. A progressive load limiting of the movable element is thereby achieved. A progressive load limiting is advantageous since the risk of destroying the housing is thereby further reuced.

According to one embodiment at least a wall section of the energy absorbing portion is curvilinear with a radius of curvature R in the range between 3 mm and 30 mm as seen in the longitudinal direction of the retaining element.

According to one embodiment a sub portion of the energy absorbing portion is linearly narrowing as seen in a direction from a first end to a second end thereof. A sub portion of the energy absorbing portion may taper at an angle with respect to the longitudinal axis of the retaining element corresponding to an angle of 1-30 degrees. Preferably around 20 degrees.

According to one embodiment a first sub portion of the energy absorbing portion has a progressively increasing cross section as seen in a direction from a second end to a first end thereof and a second sub portion of the energy absorbing portion is linearly narrowing as seen in a direction from the first end to the second end thereof.

According to one embodiment the retaining element is arranged such that the second end of the energy absorbing portion is closest to the nut.

According to one embodiment the retaining element further comprises at least one tab projecting in a direction from a first end to a second end thereof, the projected tab being arranged to prevent the nut from rotational movement. This embodiment has the advantage that rotation of the nut is prevented during screwing and unscrewing of the bolt, thereby facilitate mounting of the separation fastener assembly.

According to one embodiment the separation fastener assembly further comprises an actuator for initiating movement of the movable element from the first position to the second position. Preferably, the actuator comprises a pyrotechnical charge and an igniter.

The igniter may be adapted to receive an ignition signal from a sensor system, such as an in-crash based sensor system or a pre-crash based sensor system.

The separation fastener assembly may be arranged in a motor vehicle for releasably connecting a structural member of the vehicle to the vehicle chassis.

These and other aspects of the invention will be apparent from and elucidated with reference to the claims and the embodiments described hereinafter.

### Brief Description of the Drawings

The invention will hereafter be described in more detail and with reference to the appended schematic drawings.
Fig. 1 is a side view of a part of motor vehicle structure.
Fig. 2 is a schematic cross sectional view illustrating a separation fastener assembly according to one embodiment.
Fig. 3a is a schematic cross sectional view of the separation fastener assembly shown in Fig. 2.
Fig. 3b is a schematic perspective side view of parts of the separation fastener assembly shown in Fig. 3a.
Fig. 4a-d illustrates the function of the separation fastener assembly shown in Fig. 2 and 3.
Fig. 5 is a schematic cross sectional view of a part of a separation fastener assembly according to a second embodiment.

### Detailed Description of Preferred Embodiments of the Invention

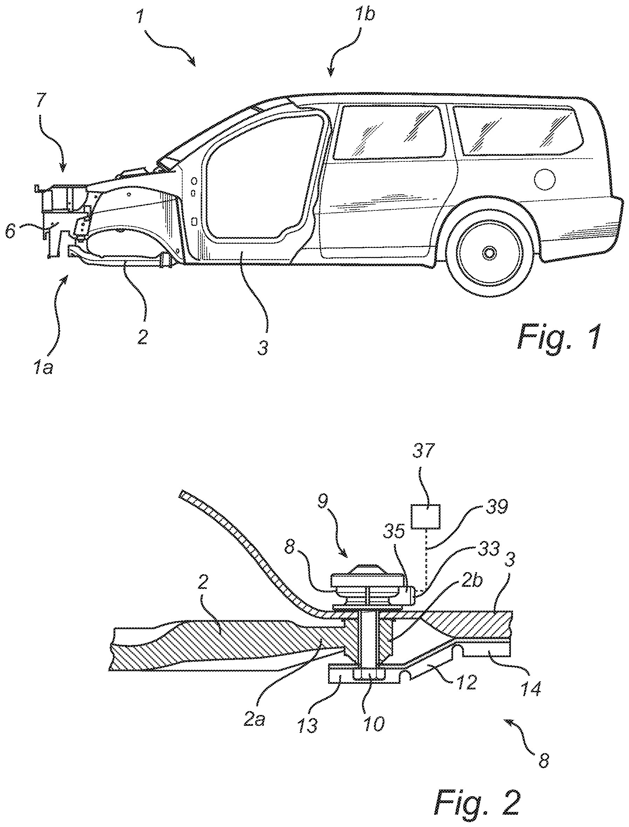

Fig. 1 shows parts of a vehicle structure 1 which comprises a front subframe 2 and a chassis 3. A separation fastener assembly according to an embodiment of the present invention may be arranged for releasably connecting the rear end of the front subframe 2 to the chassis 3. The front subframe 2, which comprises longitudinally and transversally extending structural members, is an important member of the vehicle front end structure 1a. The front end vehicle structure 1a further comprises collapsible longitudinal structural members 6 that are adapted to form a deformation zone 7 in which collision energy is absorbed during an impact event, such as in a collision with another vehicle or an object. Due to the deformation zone 7 the acceleration experienced by an occupant inside the passenger compartment 1b during an impact event is reduced. Consequently, the risk of injuries to the occupant(s) is reduced. In optimizing the stiffness of the front end structure 1a different load cases are considered.

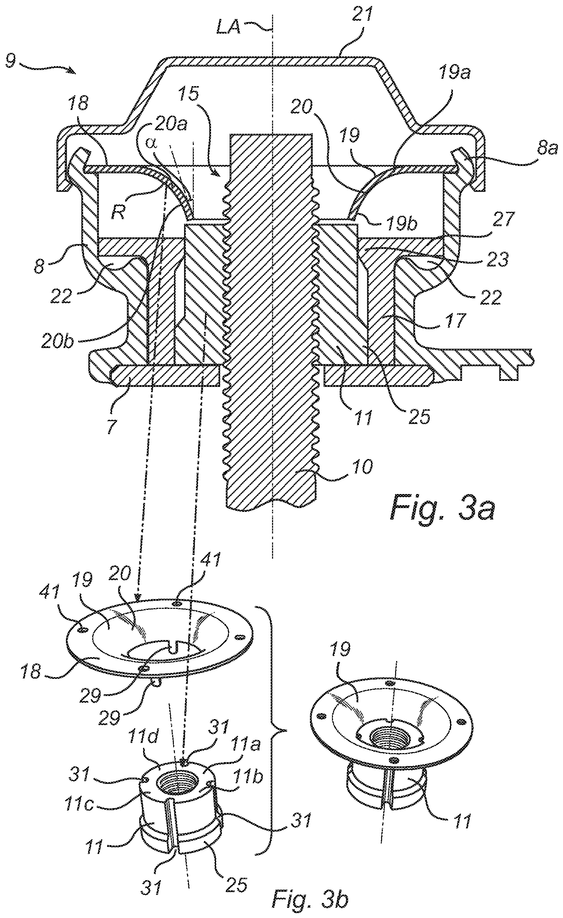

Fig. 2 shows shematically a portion of a vehicle front subframe 2 of which a rear end 2a is connected to a vehicle chassis 3 by means of a separation fastener assembly 9 according to an embodiment of the present invention. The separation fastener assembly 9 comprises a housing 8, a threaded bolt 10 and a nut 11, which is illustrated in Fig. 3, having internal threads. The nut 11 is disposed in a cavity of the housing 8. The bolt 10 extends through a sleeve 2b formed at the rear end 2a of the front subframe 2 and through an aperture in the chassis 3, and is threadably engaged with the nut 11.

The separation fastener assembly 9 further comprises a pivotable means, in the form of a lever arm 12, which at a front end 13 thereof is mounted to the rear end 2a of the front subframe 2 and at a rear end 14 thereof is mounted to the chassis 3, for assisting release of the bolt 10 from the chassis 3 when the connecting function of the fastener assembly 9 is destroyed. The housing 8 is attached to the vehicle chassis 3 by means of bolt connections where bolts (not shown) are extending through holes in a bottom flange of the housing 9.

Now referring to Figs. 3a and 3b the separation fastener assembly 9 will be further described. Fig. 3 is cross sectional side view schematically illustrating the separation fastener assembly 9. As illustrated in Fig. 3a the separation fastener assembly 9 comprises a housing 8, a nut 11, a threaded bolt 10, a movable element 17, a retaining element 19 and a lid 21. The bolt 10 and the nut 11 together form a bolt joint system 15.

The nut 11 may include a plurality of nut segments connected to one another through fracture lines such that the nut 11 is a frangible nut. For other applications within the scope of the present teachings, however, the plurality of segments may alternatively be a plurality of discrete segments. In this embodiment the nut 11 includes four nut segments 11a, 11b, 11c, 11d, as best illustrated in Fig. 3b. Adjacent nut segments of the nut 11 are interconnected at fracture lines and the nut segments 11a, 11b, 11c, 11d, together form a frangible nut 11. The frangible nut 11 may be manufactured from a powdered metal process. The powdered metal process may yield a nut 11 having high compression strength an low elongation values, resulting in a component having brittle characteristics. Alternatively, the nut 11 may be manufactured with any other suitable material capable of functioning as described herein.

The movable element 17, which is formed by a collar, is arranged around the nut 11, as best illustrated in Fig. 3a. The movable element 17 includes a portion 23 which normally abuts a corresponding portion of the nut 11 such that the movable element 17 restrains the segments 11a, 11b, 11c, 11d of the nut 11 from radial expansion. The abutting portion 23 includes a protrusion, in the form of a circumferential protrusion, extending radially inward from the side wall of the movable element 17. The nut 11 includes a portion 25 which normally abuts a corresponding portion of the movable element 17. The abutting portion 25 includes a protrusion, in the form of a circumferential protrusion, extending radially outward from the side wall of the nut 11. A circumferential channel 22 is formed between a flange portion 27 of the movable element 17 and the housing 8, as illustrated in Fig. 3a. The movable element 17 is movable from a first position, in which it restrains the nut segments 11a, 11b, 11c, 11d from radial expansion, to a second position, in which it permits the nut segments 11a, 11b, 11c, 11d to radially expand. Fig. 3a illustrates the separation fastener assembly 9 when the nut segments 11 are prevented from radial expansion by the movable element 17, i.e. when the movable element 17 is positioned in the first position. The movable element 17 is arranged to hold the nut 11 in place to secure the function of the bolt joint system 15 under normal conditions.

The retaining element 19 comprises a flat base portion 18 and a sleeve shaped energy absorbing portion 20. Each of the flat base portion 18 and the energy absorbing portion 20 is formed as an integral part of the retaining element 19. The energy absorbing portion 20 is narrowing as seen in a direction from a first end 19a to a second end 19b thereof. The energy absorbing portion 20 thus has a narrowing cross section as seen in a direction from the first end 19a to the second end 19b thereof, i.e. in the longitudinal direction A of the retaining element 19. Hence, the cross section of the energy absorbing portion 20 narrows from a large cross section at the first 19a end to a small cross section at the second end 19b, as best illustrated in Fig. 3a. The retaining element 19 is arranged such that the second end 19b, i.e. the end having the smaller cross section, is closest to the nut 11 and thus faces the nut 11.

The sleeve shaped energy absorbing portion 20 may have a progressively increasing cross section as seen in a direction from the second end 19b to the first end 19a of the retaining element 19. Preferably, at least a portion 20a of the wall of the sleeve shaped energy absorbing portion 20, as seen in a cross section, is curvilinear with a radius of curvature R in the range of 3- 30mm. In one embodiment a part of the wall of the energy absorbing portion 20, as seen in a cross section, is curvilinear with a radius of curvature corresponding to 8mm.

Alternatively, or additionally, a portion of the wall of the sleeve shaped energy absorbing portion 20b may have a cross section which tapers at an angle, as seen with respect to an axis parallel to the longitudinal axis LA of the retaining element 19, such as e.g. an angle, corresponding to an angle in the range between 1-30 degrees.

In the embodiment shown in Fig.3a the energy absorbing portion 20 comprises a first sub portion 20a having a cross section which is curvilinear with a radius of curvature corresponding to R8 and a second sub portion 20b having a cross section which tapers at an angle, as seen with respect to an axis parallel to the longitudinal axis LA of the retaining element 19, corresponding to an angle of 20 degrees, as illustrated in Fig. 3a.

The energy absorbing portion 20 is arranged to be permanently deformed in its longitudinal direction by the movable element when the movable element is moved from the first position to the second position, thereby limiting the load on the housing 8. To this end the energy absorbing portion 20 is formed from a plastically deformable material, such as e.g. steel. The movable element 17 is thus movable from the first position to a second position against a force from the energy absorbing portion 20. A portion of the energy absorbing portion 20 has a progressively increasing cross section as seen in the longitudinal direction thereof, i.e. in a direction from the second end 19b to the first end 19a.

The energy absorbing portion 20 may have a uniform thickness. Preferably the energy absorbing portion 20 has a uniform thickness of 0.5 - 2 mm. In the embodiment described hereinbefore the energy absorbing portion 20 has a uniform thickness of 1 mm.

The retaining element 19 comprises four downwardly extending tabs 29, of which two are visible in Fig. 3a. The tabs 29 are received in recesses 31 of the nut 11 and prevents the nut 11 from being rotated with respect to the housing, e.g. when the bolt 10 is tightened.

The retaining element 19 need to be attached to the housing 8 in a rather robust manner in order to withstand the forces to which it is subjected during deformation of the energy absorbing portion 20 upon movement of the movable element to the second position. In this embodiment the retaining element 19 is attached to the housing 8 at a number of riveting joints (not shown) along the circumference of the flat base portion of the retaining element 19 by means of radial riveting.

Upon assembly of the separation fastener assembly, a base of the housing 8 reacts the torque of the nut 11 and bolt 10. For certain applications, a low level of torque may be introduced during assembly to fracture the nut 11 into the discrete segments 11a, 11b, 11c, 11d. In this manner, the nut 11 may be pre-broken prior to activation of the assembly 9. Alternatively, the nut 11 may be fractured into the discrete segments 11a, 11b, 11c, 11d during activation.

It is understood that in a crash situation it may be required to rapidly release a bolt 10 from a nut 11. The movement of the movable element 17 to the second position thus need to be carried out rapidly. To this end, an initiator device comprising a pyrotechnical charge may be used to achieve a rapid movement of the movable element in case a release of the connection established by the bolt joint system 15 is desired.

In this embodiment the separation fastener assembly 9 comprises an initiator device, in the form of a pyrotechnical squib 33, of a type known in the art. The pyrotechnical squib 33, which is carried by the housing 8, comprises a pyrotechnical charge and an electrical igniter. The pyrotechnical squib 33 is received in a receiving portion 35 of the housing 8, as illustrated in Fig. 2. In order to fasten the squib 33 it may have external threads that are engaged with internal threads of the receiving portion 35. The squib 33 is connected to a control unit 37 by means of a cable 39, as schematically illustrated in Fig. 2. The receiving portion 25, and thus the squib 33, is in communication with the circumferential channel 22 through an apperture (not shown) of the housing 8. Upon ignition of the squib 33 the circumferential channel 22 is pressurized.

The flat base portion 18 of the retaining element 19 is provided with a plurality of holes 41, as best illustrated in Fig.3b, preventing the movable element 17 from being displaced from its normal position due to e.g. pressure leakage. As described hereinbefore the separation fastener assembly 9 comprises a protecting lid 21, in the form of a plastic lid. The lid, which may be formed from a thermoplastic elastomer, protects the joint bolt sytem 15 from e.g. water.

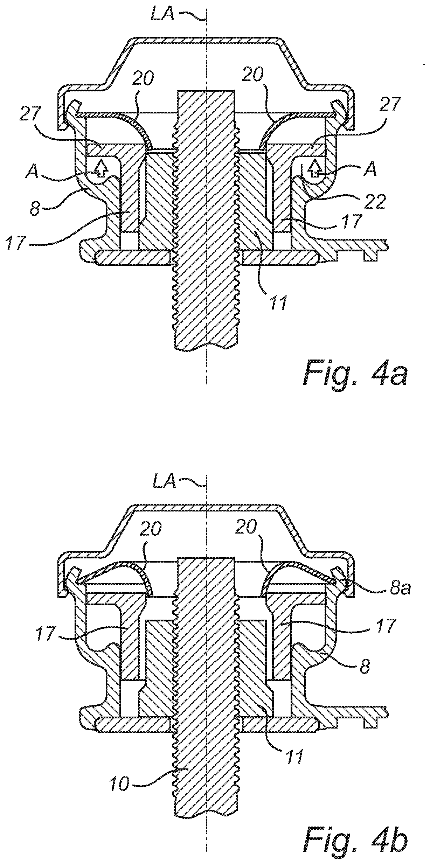

Now referring to Figs. 4a-4d, the function of the separation fastener assembly 9 will be described. Upon ignition of the squib 33 (not shown in Figs. 4a-4d) it produces a volume of gas at elevated pressure which is received in the circumferential channel 22. Due to elevated pressure inside the circumferential channel 22 a force is applied on the flange 27 of the movable element 17, thereby causing the movable element 17 to perform a movement away from the segmented nut 11, as indicated by arrows A in Fig. 4a. The movable element 17 is moved into engagement with the energy absorbing portion 20 which is then deformed by the movable element 17, as illustrated in Fig. 4b. The sleeve shaped energy absorbing portion 20 is permanently deformed by the movable element 17. Hence, the energy absorbing portion 20 absorbs impact energy of the movable element 17 during its movement toward the second position.

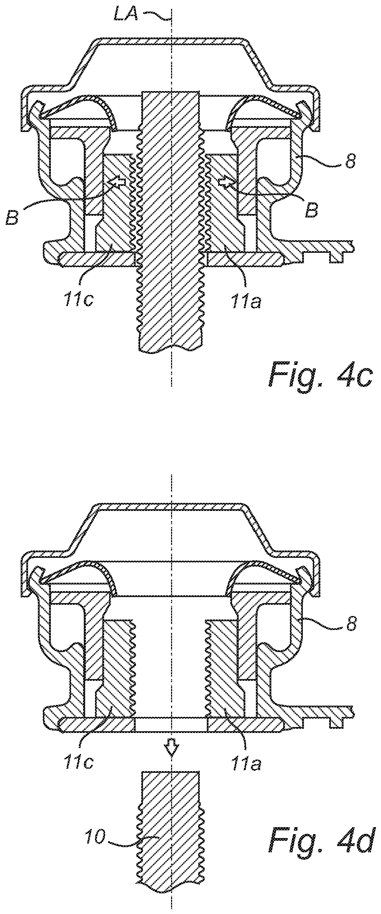

The movable element 17 is moved to a second position, illustrated in Fig. 4b, in which it no longer restrains the nut segments 11a, 11b, 11c, 11d, thereby enabling movement of the nut segments 11a, 11b, 11c, 11d in radial direction. At this stage the bolt 10 is subjected to forces in its longitudinal direction A due to crash forces. As a result the fracture lines of the frangible nut 11 are broken. The nut segments 11a, 11b, 11c, 11d are then separated from each other and from the bolt 10 by forces from the bolt 10, as illustrated by arrows B in Fig. 4c. The fracture lines are broken at this stage or they may alternatively be already pre-broken. Consequently, the connecting function of the bolt joint system 15 is destroyed which enables displacement of the bolt 10, as illustrated by the arrow C in Fig. 4d, and thereby displacement of the rear end 2a of the front subframe 2 relative to the vehicle chassis 3.

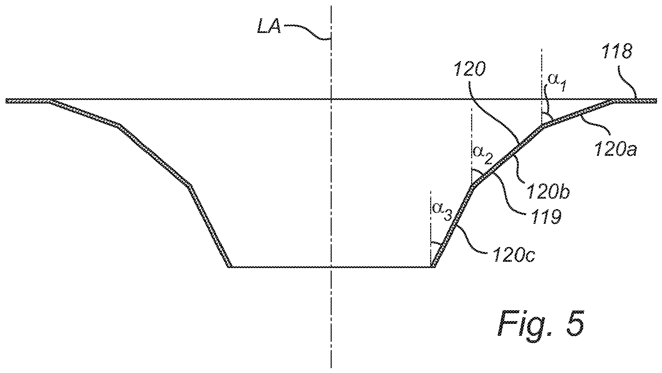

Hereinafter a separation fastener assembly according to a second embodiment of the present invention will be described with reference to Fig. 5. Many features disclosed in the first embodiment are also present in the second embodiment with similar reference numerals identifying similar or same features. Having mentioned this, the description will focus on explaining the differing features of the second embodiment.

The second embodiment differs in that the energy absorbing portion 120 comprises three linearly narrowing sub portions 120a, 120b, 120c as seen along the longitudinal axis of the retaining element 119. A first sub portion 120a extends from the flat base portion 118 to a second sub portion 120b of the retaining element 119. The second sub portion 120b extends from the first sub portion 120a to a third sub portion 120c of the energy absorbing portion 120. The third sub portion 120c extends from the second sub portion 120b to the second end 119b of the retaining element 119. The cross section of the first sub portion 120a tapers at a first angle α1 as seen with respect to an axis parallel to the longitudinal axis LA of the retaining element 119. The cross section of the second sub portion tapers at a second angle α2, as seen with respect to the longitudinal axis of the retaining element 119, which is less than the first angle. The cross section of the third sub portion 120c is tapering at a third angle α3, as seen with respect to the longitudinal axis of the retaining element, which is less than the second angle α2.

Preferably, the cross section of the first sub portion 120a tapers at a first angle α1, as seen with respect to the longitudinal axis of the retaining element 119, corresponding to an angle of 1 - 30 degrees.

Preferably, the cross section of the second sub portion 120c tapers at a second angle α2, as seen with respect to the longitudinal axis of the retaining element 119, corresponding to an angle of 30 - 60 degrees.

Preferably, the cross section of the third sub portion 120c tapers at a third angle α3, as seen with respect to the longitudinal axis of the retaining element 119, corresponding to an angle in the range between 60 - 90 degrees.

In one embodiment α1 corresponds to an angle of 20 degrees, α2 to an angle of 40 degrees and α3 to an angle of 60 degrees.

It is realized by a person skilled in the art that features from various embodiments disclosed herein may be combined with one another in order to provide further alternative embodiments.

Hereinbefore, it has been described that the movable element includes a protrusion which normally abuts the nut such that the movable element restrains the nut segments from radial expansion. It is appreciated that the movable element may include further portions which normally abut corresponding portions of the nut 11. Alternatively, the movable element may not include such a protrusion. Then, the nut need to have at least one protrusion which normally abuts the movable element.

## Claims

1. A separation fastener assembly comprising
a nut (11) having a plurality of nut segments (11a, 11b, 11c, 11d),
a movable element (17) which is movable from a first position, in which it restrains the nut segments (11a, 11b, 11c, 11d) from radial expansion, to a second position, in which it permits the nut segments (11a, 11b, 11c, 11d) to radially expand,
a bolt (10) having one end coupled to the nut (11), and
a retaining element (19) which is arranged to hold the nut (11) in place, **cha**
**racterized** in that
the retaining element (19) comprises an energy absorbing portion (20) which is sleeve shaped and adapted to be permanently deformed by the movable element (17) when the movable element (17) is moved from the first position to the second position, wherein at least a sub portion (20a) of the energy absorbing portion (20) is narrowing as seen in a direction from a first end (19a) to a second end (19b) thereof.

2. A separation fastener assembly according to claim 1, wherein adjacent nut segments (11a, 11b, 11c, 11d) are interconnected at fracture lines, thereby forming a frangible nut (11).

3. A separation fastener assembly according to any of the preceding claims, wherein at least a sub portion (20a) of the energy absorbing portion (20) has a progressively increasing cross section as seen in a direction from a second end (19b) to a first end (19a) thereof.

4. A separation fastener assembly according to any of the preceding claims, wherein at least a wall section (20a) of the energy absorbing portion (20) is curvilinear with a radius of curvature R in the range between 3 mm and 30 mm as seen in the longitudinal direction of the retaining element (19).

5. A separation fastener assembly according to any of the preceding claims, wherein a sub portion (20b) of the energy absorbing portion (20) is linearly narrowing as seen in a direction from a first end (19a) to a second end (19b) thereof.

6. A separation fastener assembly according claim 5, wherein a sub portion (20b) of the energy absorbing portion (20) tapers at an angle (α) with respect to the longitudinal axis of the retaining element corresponding to an angle of 10-30 degrees.

7. A separation fastener assembly according to any of the preceding claims wherein a first sub portion (20a) of the energy absorbing portion (20) has a progressively increasing cross section as seen in a direction from a second end (19b) to a first end thereof (19a) and a second sub portion (20b) of the energy absorbing portion (20) is linearly narrowing as seen in a direction from the first end (19a) to the second end (19b) thereof.

8. A separation fastener assembly according to claim 1, wherein the retaining element is arranged such that the second end (20b) of the energy absorbing portion is closest to the nut (11).

9. A separation fastener assembly according to any of the preceding claims, wherein the retaining element (19) further comprises at least one tab (29) projecting in a direction from a first end (19a) to a second end (19b) thereof, the projected tab (29) being arranged to prevent the nut (11) from rotational movement.

10. A separation fastener assembly according to any of the preceding claims, further comprising an actuator (23, 37, 39) for initiating movement of the movable element (17) from the first position to the second position.

11. A separation fastener assembly according to claim 10, wherein the actuator (33, 37, 39) comprises a pyrotechnical charge and an igniter (33).

12. A separation fastener assembly according to claim 11, wherein the igniter (33) is adapted to receive an ignition signal from a sensor system (37), such as an in-crashbased sensor system or a pre-crash based sensor system.

13. A separation fastener assembly according to any of the preceding claims arranged in a motor vehicle (1) for releasably connecting a structural member (2) of the vehicle (1) to the vehicle chassis (3).

## Patentansprüche

1. Befestigertrennungsanordnung, umfassend:
eine Mutter (11) mit einer Vielzahl von Mutternsegmenten (11a, 11b, 11c, 11 d),
ein bewegliches Element (17), das aus einer ersten Stellung, in der es die Mutternsegmente (11a, 11b, 11c, 11d) von einer radialen Ausdehnung abhält, in eine zweite Stellung bewegbar ist, in der es zulässt, dass sich die Mutternsegmente (11a, 11b, 11c, 11d) radial ausdehnen,
einen Bolzen (10), bei dem ein Ende mit der Mutter (11) verbunden ist, und
ein Halteelement (19), das so angeordnet ist, dass es die Mutter (11) festhält,
**dadurch gekennzeichnet, dass**
das Halteelement (19) einen energieaufnehmenden Abschnitt (20) umfasst, der hülsenförmig und so ausgelegt ist, dass er dauerhaft von dem beweglichen Element (17) verformt wird, wenn das bewegliche Element (17) aus der ersten Stellung in die zweite Stellung bewegt wird, wobei zumindest ein Teilabschnitt (20a) des energieaufnehmenden Abschnitts (20) in einer Richtung von einem ersten Ende (19a) zu einem zweiten Ende (19b) davon betrachtet schmaler wird.

2. Befestigertrennungsanordnung nach Anspruch 1, wobei benachbarte Mutternsegmente (11a, 11b, 11c, 11d) an Bruchlinien miteinander verbunden sind, wodurch eine zerreißbare Mutter (11) gebildet ist.

3. Befestigertrennungsanordnung nach einem der vorhergehenden Ansprüche, wobei zumindest ein Teilabschnitt (20a) des energieaufnehmenden Abschnitts (20) in einer Richtung von einem ersten Ende (19a) zu einem zweiten Ende (19b) davon betrachtet einen schrittweise größer werdenden Querschnitt aufweist.

4. Befestigertrennungsanordnung nach einem der vorhergehenden Ansprüche, wobei zumindest ein Wandabschnitt (20a) des energieaufnehmenden Abschnitts (20) in der Längsrichtung des Halteelements (19) betrachtet gekrümmt mit einem Krümmungsradius R im Bereich zwischen 3 mm und 30 mm ist.

5. Befestigertrennungsanordnung nach einem der vorhergehenden Ansprüche, wobei ein Teilabschnitt (20b) des energieaufnehmenden Abschnitts (20) in einer Richtung von einem ersten Ende (19a) zu einem zweiten Ende (19b) davon betrachtet geradlinig schmaler wird.

6. Befestigertrennungsanordnung nach Anspruch 5, wobei ein Teilabschnitt (20b) des energieaufnehmenden Abschnitts (20) unter einem Winkel (a) bezogen auf die Längsachse des Halteelements konisch zuläuft, der einem Winkel von 10 bis 30 Grad entspricht.

7. Befestigertrennungsanordnung nach einem der vorhergehenden Ansprüche, wobei ein erster Teilabschnitt (20a) des energieaufnehmenden Abschnitts (20) in einer Richtung von einem zweiten Ende (19b) zu einem ersten Ende (19a) davon betrachtet einen schrittweise größer werdenden Querschnitt aufweist und ein zweiter Teilabschnitt (20b) des energieaufnehmenden Abschnitts (20) in einer Richtung vom ersten Ende (19a) zum zweiten Ende (19b) davon betrachtet geradlinig schmaler wird.

8. Befestigertrennungsanordnung nach Anspruch 1, wobei das Halteelement so angeordnet ist, dass das zweite Ende (20b) des energieaufnehmenden Abschnitts am nächsten an der Mutter (11) liegt.

9. Befestigertrennungsanordnung nach einem der vorhergehenden Ansprüche, wobei das Halteelement (19) ferner mindestens eine Zunge (29) umfasst, die in eine Richtung von einem ersten Ende (19a) zu einem zweiten Ende (19b) davon vorragt, wobei die vorragende Zunge (29) so eingerichtet ist, dass sie die Mutter (11) an einer Drehbewegung hindert.

10. Befestigertrennungsanordnung nach einem der vorhergehenden Ansprüche, die ferner ein Betätigungsglied (23, 37, 39) zum Auslösen der Bewegung des beweglichen Elements (17) aus der ersten Stellung in die zweite Stellung umfasst.

11. Befestigertrennungsanordnung nach Anspruch 10, wobei das Betätigungsglied (33, 37, 39) eine pyrotechnische Ladung und einen Zünder (33) umfasst.

12. Befestigertrennungsanordnung nach Anspruch 11, wobei der Zünder (33) so ausgelegt ist, dass er ein Zündsignal von einem Sensorsystem (37) empfängt, beispielsweise einem In-Crash-Sensorsystem oder einem Pre-Crash-Sensorsystem.

13. Befestigertrennungsanordnung nach einem der vorhergehenden Ansprüche, die in einem Kraftfahrzeug (1) zum lösbaren Verbinden eines Konstruktionselements (2) des Fahrzeugs (1) mit dem Fahrgestellrahmen (3) angeordnet ist.

## Revendications

1. Ensemble de fixation à séparation comprenant
un écrou (11) comportant une pluralité de segments d'écrou (11a, 11b, 11c, 11d),
un élément mobile (17) qui est mobile d'une première position, dans laquelle il empêche une expansion radiale des segments d'écrou (11a, 11b, 11c, 11d), à une seconde position, dans laquelle il permet une expansion radiale des segments d'écrou (11a, 11b, 11c, 11d),
un boulon (10) présentant une extrémité couplée à l'écrou (11), et
un élément de retenue (19) qui est conçu pour maintenir l'écrou (11) en place,
**caractérisé en ce que**
l'élément de retenue (19) comprend une partie d'absorption d'énergie (20) qui est en forme de manchon et adaptée pour être déformée de manière permanente par l'élément mobile (17) quand l'élément mobile (17) est déplacé de la première position à la seconde position, au moins une sous-partie (20a) de la partie d'absorption d'énergie (20) se resserrant lorsqu'elle est vue dans une direction allant d'une première extrémité (19a) à une seconde extrémité (19b) de celle-ci.

2. Ensemble de fixation à séparation selon la revendication 1, dans lequel des segments d'écrou (11a, 11b, 11c, 11d) adjacents sont reliés entre eux sur des lignes de rupture, formant ainsi un écrou cassable (11).

3. Ensemble de fixation à séparation selon l'une quelconque des revendications précédentes, dans lequel au moins une sous-partie (20a) de la partie d'absorption d'énergie (20) présente une section transversale augmentant progressivement lorsqu'elle est vue dans une direction allant d'une seconde extrémité (19b) à une première extrémité (19a) de celle-ci.

4. Ensemble de fixation à séparation selon l'une quelconque des revendications précédentes, dans lequel au moins une portion de paroi (20a) de la partie d'absorption d'énergie (20) est curviligne avec un rayon de courbure R compris dans la plage de 3 mm à 30 mm lorsqu'elle est vue dans la direction longitudinale de l'élément de retenue (19).

5. Ensemble de fixation à séparation selon l'une quelconque des revendications précédentes, dans lequel une sous-partie (20b) de la partie d'absorption d'énergie (20) se resserre de manière linéaire lorsqu'elle est vue dans une direction allant d'une première extrémité (19a) à une seconde extrémité (19b) de celle-ci.

6. Ensemble de fixation à séparation selon la revendication 5, dans lequel une sous-partie (20b) de la partie d'absorption d'énergie (20) s'amincit selon un angle (a) par rapport à l'axe longitudinal de l'élément de retenue correspondant à un angle de 10 à 30 degrés.

7. Ensemble de fixation à séparation selon l'une quelconque des revendications précédentes, dans lequel une première sous-partie (20a) de la partie d'absorption d'énergie (20) présente une section transversale augmentant progressivement lorsqu'elle est vue dans une direction allant d'une seconde extrémité (19b) à une première extrémité (19a) de celle-ci et une seconde sous-partie (20b) de la partie d'absorption d'énergie (20) se resserre de manière linéaire lorsqu'elle est vue dans une direction allant de la première extrémité (19a) à la seconde extrémité (19b) de celle-ci.

8. Ensemble de fixation à séparation selon la revendication 1, dans lequel l'élément de retenue est agencé de telle sorte que la seconde extrémité (20b) de la partie d'absorption d'énergie est la plus proche de l'écrou (11).

9. Ensemble de fixation à séparation selon l'une quelconque des revendications précédentes, dans lequel l'élément de retenue (19) comprend en outre au moins une languette (29) faisant saillie dans une direction allant d'une première extrémité (19a) à une seconde extrémité (19b) de celui-ci, la languette (29) en saillie étant conçue pour empêcher un mouvement de rotation de l'écrou (11).

10. Ensemble de fixation à séparation selon l'une quelconque des revendications précédentes, comprenant en outre un actionneur (23, 37, 39) destiné à engager un déplacement de l'élément mobile (17) de la première position à la seconde position.

11. Ensemble de fixation à séparation selon la revendication 10, dans lequel l'actionneur (33, 37, 39) comprend une charge pyrotechnique et un allumeur (33).

12. Ensemble de fixation à séparation selon la revendication 11, dans lequel l'allumeur (33) est adapté pour recevoir un signal d'allumage provenant d'un système détecteur (37), tel qu'un système détecteur fonctionnant en phase de collision ou un système détecteur fonctionnant en phase de pré-collision.

13. Ensemble de fixation à séparation selon l'une quelconque des revendications précédentes, agencé dans un véhicule à moteur (1) pour relier de manière libérable un élément structural (2) du véhicule (1) au châssis du véhicule (3).
